(19) Europäisches Patentamt
European Patent Office
Office européen des brevets

(11) **EP 4 037 005 B1**

(12) **EUROPEAN PATENT SPECIFICATION**

(45) Date of publication and mention
of the grant of the patent:
**18.02.2026 Bulletin 2026/08**

(21) Application number: **21214020.6**

(22) Date of filing: **13.12.2021**

(51) International Patent Classification (IPC):
*H01M 4/04* (2006.01)     *B32B 39/00* (2006.01)
*B65G 15/00* (2006.01)     *H01M 4/139* (2010.01)
*B05C 1/08* (2006.01)     *H01M 10/05* (2010.01)

(52) Cooperative Patent Classification (CPC):
**H01M 4/0409; B05C 1/083; B05C 1/0834;
B05C 1/0865; H01M 4/0404; H01M 4/139;**
H01M 10/05; Y02E 60/10

(54) **ELECTRODE PRODUCTION APPARATUS AND ELECTRODE PRODUCTION METHOD**

ELEKTRODENHERSTELLUNGSVORRICHTUNG UND
ELEKTRODENHERSTELLUNGSVERFAHREN

APPAREIL ET PROCÉDÉ DE PRODUCTION D'ÉLECTRODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2021 JP 2021011046**

(43) Date of publication of application:
**03.08.2022 Bulletin 2022/31**

(73) Proprietors:
• **Prime Planet Energy & Solutions, Inc.
Tokyo 103-0022 (JP)**
• **TOYOTA JIDOSHA KABUSHIKI KAISHA
Toyota-shi, Aichi-ken, 471-8571 (JP)**

(72) Inventors:
• **ENOKIHARA, Katsushi
Tokyo, 103-0022 (JP)**
• **MASHIMO, Naohiro
Tokyo, 103-0022 (JP)**
• **ISHIYAMA, Shou
Aichi-ken, 471-8571 (JP)**

(74) Representative: **Kuhnen & Wacker
Patent- und Rechtsanwaltsbüro PartG mbB
Prinz-Ludwig-Straße 40A
85354 Freising (DE)**

(56) References cited:
WO-A1-2019/181581     US-A- 5 355 799
US-A1- 2015 224 529     US-A1- 2018 006 292

## Description

BACKGROUND OF THE DISCLOSURE

1. Technical Field

The present disclosure relates to an electrode production apparatus and to an electrode production method that utilizes the electrode production apparatus.

2. Description of Background

In recent years, nonaqueous electrolyte secondary batteries such as lithium ion secondary batteries have come to be suitably used as portable power sources in personal computers and mobile terminals, and as power sources for vehicle drive in battery electric vehicles (BEV), hybrid electric vehicles (HEV) and plug-in hybrid electric vehicles (PHEV).

Such nonaqueous electrolyte secondary batteries are provided with a power generation element in the form of an electrode body having a positive electrode and a negative electrode. The positive electrode typically has a positive electrode mix layer containing a positive electrode active material on a sheet-shaped positive electrode collector. Similarly, the negative electrode also typically has a negative electrode mix layer containing a negative electrode active material on a sheet-shaped negative electrode collector. Examples of methods for producing such electrodes include a method in which an electrode material containing a positive or negative electrode active material is supplied between a pair of rolls (first roll and second roll) disposed opposing each other, the supplied electrode material is caused to adhere, in the state of a coating film, to the second roll, whereupon the second roll rotates while holding the coating film adhered thereto, to transfer the coating film onto an electrode collector, and thereby form an electrode mix layer made up of the coating film. In a case where an electrode is produced in accordance with such a method, therefore, an electrode production apparatus is used that has a pair of opposing rolls.

SUMMARY

When using this type of electrode production apparatus it is required that the electrode material be released without leaving an adhesion residue and be suitably transferred between the first roll and the second roll and between the second roll and the electrode collector. Moreover, the surface condition (quality) of the coating film (electrode mix layer) transferred onto the electrode collector is required to be good. Various proposals have been conventionally made with a view to meeting such demands. For instance Japanese Patent Application JP 2018-63776 A and Japanese Patent Application JP 2016-207340 A describe a method in which the surface (circumferential surface) of the second roll is processed by sandblasting, so that the surface is imparted with the predetermined values of surface roughness, average length of a surface roughness curve element, and kurtosis in a surface roughness curve.

However, in the methods disclosed in JP 2018-63776 A and JP 2016-207340 A the circumferential surface of metal rolls was processed by sandblasting; in consequence, variability was prone to occur in the roll circumferential surface and it was difficult to make adjustments when local defects occurred in part of the roll circumferential surface. Occurrence of defects on the roll circumferential surface is undesirable since in that case the surface roughness of the coating film may deteriorate and the thickness of the coating film may fluctuate. Such being the case, the present inventors found out, as a result of diligent research, that variability in the roll circumferential surface is suppressed, and coating film transfer can be suitably performed, by prescribing a textured shape that affords both desired releasability and desired adhesiveness, and by forming such a textured shape on a roll circumferential surface.

From US 2015/0224529 A1, a manufacturing apparatus for a coating film product is known which rolls a mixture coating material by a first roll and transfers the mixture coating material to a coated object in motion to thereby manufacture the coating film product. An arithmetic average roughness Ra on a roll surface of the first roll is higher than a value 0.05 times of a particle size "d10" in which an integrated distribution of particle sizes of particles included in the mixture coating material is 10% and lower than a value 20 times a particle size "d90" in which an integrated distribution is 90%.

It is a main object of the present disclosure, arrived at in the light of the above considerations, to provide an electrode production apparatus which combines releasability and adhesiveness that allow suitably transferring a coating film between a first roll and a second roll, and between a second roll and an electrode collector. It is another object to provide a method for producing a coating film (electrode mix layer), using such an electrode production apparatus, such that the surface of a coating film (electrode mix layer) transferred onto an electrode collector exhibits a good surface condition. This object is solved by the electrode production apparatus according to claim 1 and the electrode production method according to claim 6.

An electrode production apparatus having the configuration below is provided so as to attain the above object. Specifically, the electrode production apparatus disclosed herein has a first roll, and a second roll disposed opposing the first roll and having a higher rotational speed than that of the first roll; and an electrode material supplied between a circumferential surface of the first roll and a circumferential surface of the second roll is caused to be adhered, as a coating film, on the circumferential surface of the second roll, and the coating film is transferred from the circumferential surface of the second roll onto a surface of an electrode collector separately supplied to the second roll, to thereby form an electrode mix layer made up of the transferred coating film, on the electrode collector. A predetermined textured shape is formed on the circumferential surface of the first roll and on the circumferential surface of the second roll of the electrode production apparatus; the textured shape being formed through repetition of a predetermined relief pattern, at a given pitch, in a running direction. The pitch (smallest repeating unit) and a recess depth of the relief pattern are designed so that the following expression: $y \leq 0.2x - 20$ holds, where x ($\mu$m) denotes the pitch and y ($\mu$m) denotes the recess depth.

In such a configuration, the coating film made up of an electrode material is released without leaving an adhesion residue on the first roll circumferential surface, and becomes adhered to, and held on, the second roll circumferential surface. The coating film held on the second roll circumferential surface is released, without leaving an adhesion residue on the second roll circumferential surface, and becomes adhered to the electrode collector. Such an electrode production apparatus that affords both releasability and adhesiveness allows suitably transferring a coating film between the first roll and the second roll, and between the second roll and the electrode collector.

In a preferred implementation of the production apparatus disclosed herein, the material of the circumferential surface on which the textured shape is formed, in the first roll and the second roll, is a ceramic.

Such a configuration allows suppressing the occurrence of metallic foreign matter during the production of an electrode.

In a preferred implementation of the production apparatus disclosed herein, the pitch of the textured shape lies in a range from 150 $\mu$m to 300 $\mu$m. In another preferred implementation, in the above expression $y \leq 0.2x - 20$, x is prescribed so that the recess depth of the relief pattern lies in the range from 4 to 15 $\mu$m.

By virtue of such a configuration an electrode production apparatus is provided that affords both releasability and adhesiveness described above at a yet higher level.

In a preferred implementation of the production apparatus disclosed herein, a relationship between a rotational speed S1 of the first roll and a rotational speed S2 of the second roll satisfies the following expression: $1.5 \times S1 < S2 < 5 \times S1$

Such a configuration allows suitably transferring a coating film between the first roll and the second roll.

A method for producing an electrode is also provided so as to attain the above other object. In the electrode production method disclosed herein, there are provided a first roll, and a second roll disposed opposing the first roll and having a higher rotational speed than that of the first roll; and in which an electrode material supplied between a circumferential surface of the first roll and a circumferential surface of the second roll is caused to be adhered, as a coating film, on the circumferential surface of the second roll, and the coating film is transferred from the second roll onto a surface of an electrode collector separately supplied to the second roll, to thereby form an electrode mix layer made up of the transferred coating film, on the electrode collector. In such a production method an electrode is produced using the production apparatus described above, having the first roll and second roll.

Such a configuration allows producing a coating film (electrode mix layer), transferred onto the electrode collector, that exhibits a good surface condition.

In a preferred implementation of the production method disclosed herein, when a total weight of the electrode material is defined as 100% by weight, the weight% of solids is 55 wt% to 90 wt%.

Such a configuration allows yet more suitably producing a coating film having a surface in good condition.

BRIEF DESCRIPTION OF THE DRAWINGS

FIG. 1 is a perspective-view diagram illustrating schematically an electrode production apparatus according to an embodiment;
FIG. 2A is an explanatory diagram illustrating schematically an example of a textured shape according to an embodiment;
FIG. 2B is an explanatory diagram illustrating schematically another example of a textured shape according to an embodiment;
FIG. 2C is an explanatory diagram illustrating schematically another example of a textured shape according to an embodiment; and
FIG. 3 is a graph illustrating a relationship between pitch and recess depth of a textured shape formed on the circumferential surfaces of a first roll and a second roll.

DETAILED DESCRIPTION

Preferred embodiments of the present disclosure will be explained next with reference to accompanying drawings. In the embodiments explained below, a production apparatus and a production method of an electrode of a lithium ion secondary battery are illustrated as preferred examples in which the electrode production apparatus and electrode production method disclosed herein are utilized, but such embodiments are not meant to limit the scope of the present disclosure. Any features other than the matter specifically set forth in the present specification and that may be necessary for carrying out the present disclosure (for instance the general configuration of an electrode production apparatus, and the production process of an electrode, not being characterizing features of the present disclosure) can be regarded as instances of design matter, for a person skilled in the art, based on known techniques in the relevant technical field. The present disclosure can be realized on the basis of the disclosure of the present specification and common technical knowledge in the technical field in question. The dimensional relationships (length, width, thickness and so forth) in the figures do not reflect actual dimensional relationships.

In the present specification a range notated as "A to B (where A and B are arbitrary numerical values)" denotes a value equal to or larger than A and equal to or smaller than B.

In the present specification the term "nonaqueous electrolyte secondary battery" denotes a power storage device in general that can be charged and discharged repeatedly and that utilizes a nonaqueous electrolyte solution as an electrolyte, and encompasses power storage elements such as so-called storage batteries and electrical double layer capacitors. In the present specification the term "lithium ion secondary battery" denotes a nonaqueous electrolyte secondary battery that utilizes lithium ions as charge carriers, and in which charging and discharge are realized as a result of movement of charge with lithium ions, between a positive electrode and a negative electrode.

(1) Electrode material

The electrode material may be in the form of a paste, a slurry or a granulated product, but in the electrode production apparatus disclosed herein a granulated product, and in particular a wet granulated product (granulated product containing a small amount of solvent) is suitable for the purpose of forming an electrode mix layer on an electrode collector. Such a wet granulated product is produced by mixing at least a granular electrode active material and a solvent. In the present specification the term "wet granulated product" denotes a mixture of at least a powder material and a solvent, and denotes a granulated product that is present dispersed as multiple discontinuous bodies in the form of a powder, lumps or chunks (clumps comparatively larger than a powder form).

The particle size of the granulated product may be larger than a gap width between a first roll and a second roll of the electrode production apparatus disclosed herein. For instance the gap width may be ordinarily several tens of $\mu m$ (for instance from 30 to 50 $\mu m$), and the particle size of the granulated product may be of several hundred $\mu m$ (for example from 200 to 300 $\mu m$).

An electrode material ordinarily used as an electrode material in conventional nonaqueous electrolyte secondary batteries, in particular lithium ion secondary batteries, can be used as the electrode material herein. In a case for instance where the electrode material is a material for a positive electrode, the electrode material (positive electrode material) typically contains a positive electrode active material and a solvent, and also contains a conductive material, a binder and the like as other additives. For instance a lithium-transition metal complex oxide or a lithium-transition metal phosphate compound (for instance $LiFePO_4$) can be preferably used as the positive electrode active material. Examples of lithium-transition metal composite oxides include lithium-nickel complex oxides, lithium-cobalt complex oxides, lithium-manganese complex oxides, lithium-nickel-manganese complex oxides (for instance $LiNi_{0.5}Mn_{1.5}O_4$) and lithium-nickel-manganese-cobalt complex oxides (for instance $LiNi_{1/3}Co_{1/3}Mn_{1/3}O_2$). For instance N-methyl-2-pyrrolidone can be used as the solvent. For instance carbon black such as acetylene black (AB), or other carbon materials (for instance graphite), can be used as the conductive material. For instance polyvinylidene fluoride (PVDF) can be used as the binder.

In a case where the electrode material is a material for a negative electrode, the electrode material (negative electrode material) typically contains a negative electrode active material and a solvent, and also contains a binder, a thickener and the like as other additives. For instance a carbon material such as graphite, hard carbon or soft carbon can be suitably used as the negative electrode active material. For instance water can be used as the solvent. For instance styrene butadiene rubber (SBR) can be used as the binder. For instance carboxymethyl cellulose (CMC) can be used as the thickener.

When a total weight of the electrode material is defined as 100% by weight, the weight% of solids is preferably 55 wt% to 90 wt%. A film can be suitably formed by the electrode production apparatus disclosed herein if the electrode material is an electrode material containing solids within such a range. In the present specification the term total weight of the electrode material denotes the weight upon mixing of all the electrode materials, and the term solids denotes the material resulting from excluding the solvent from the above electrode materials.

(2) Electrode production apparatus

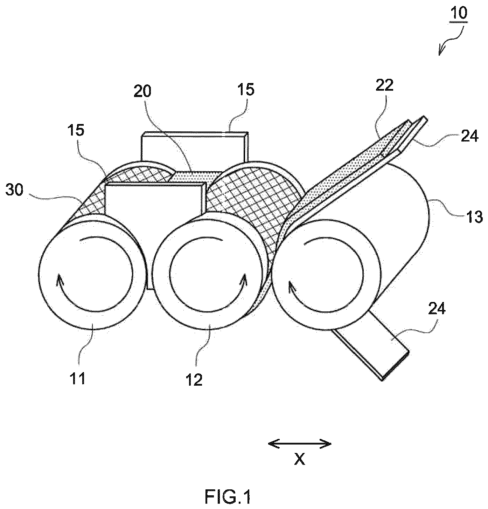

FIG. 1 is a perspective-view diagram illustrating schematically an electrode production apparatus 10 disclosed herein. The electrode production apparatus 10 has a first roll 11 and a second roll 12. The rotation axis of the first roll 11 and the rotation axis of the second roll 12 are juxtaposed horizontally. However, the arrangement of the first roll 11 and the second roll 12 is not limited thereto. The first roll 11 and the second roll 12 are separated from each other by a distance corresponding to a desired thickness of an electrode mix layer (coating film) 22 formed on an electrode collector 24. Specifically, a gap of predetermined width (thickness) is present between the first roll 11 and the second roll 12, such that the thickness of the coating film 22 made up of an electrode material 20 and adhered to the surface of the second roll 12 can be controlled on the basis of the size of that gap. The outer peripheral surface of the first roll 11 and the outer peripheral surface of the second roll 12 oppose each other. The first roll 11 and the second roll 12 rotate in opposite directions, as depicted by the arrows in FIG. 1.

Partition walls 15 are provided at both ends of the first roll 11 and the second roll 12 in the width direction. The partition walls 15 have the function of holding the electrode material 20 on the first roll 11 and the second roll 12, and of defining the width of the electrode mix layer (coating film) 22 formed on the electrode collector 24, on the basis of the distance between the two partition walls 15. The electrode material 20 is supplied between the two partition walls 15 by a feeder (not shown) or the like.

The partition walls 15 are not an essential configuration of the electrode production apparatus 10 disclosed herein, and thus the electrode production apparatus 10 need not thus have the partition walls 15. For instance an implementation is also possible in which a feeder is used that has a nozzle of a shape matching the shape of the outer periphery of the rolls, the nozzle of the feeder being disposed in the gap between the first roll 11 and the second roll 12. In this implementation the side surfaces of the feeder nozzle of the feeder function as the partition walls 15.

In such an electrode production apparatus 10, a third roll 13 is disposed next to the second roll 12. The third roll 13 has the role of transporting the electrode collector 24 up to the second roll 12. In FIG. 1 the rotation axis of the second roll 12 and the rotation axis of the third roll 13 are disposed so as to be juxtaposed horizontally, but the arrangement of the third roll 13 is not limited to that illustrated in the figures, so long as the third roll 13 is configured to transport the electrode collector 24 to the second roll 12 so that the electrode material 20 on the second roll 12 is transferred to the electrode collector 24. The second roll 12 and the third roll 13 rotate in opposite directions, as depicted by the arrows in FIG. 1. The third roll 13 is not an essential configuration of the electrode production apparatus 10 disclosed herein, and a transport means of the electrode collector 24 other than the third roll 13 may be used, so long as the electrode material 20 on the second roll 12 is transferred to the electrode collector 24.

The first roll 11 and the second roll 12 each have a textured shape 30 formed on the circumferential surface of the roll. Such a textured shape 30 is formed through repetition of a predetermined relief pattern, at a given pitch, in a running direction. The textured shape 30 is designed in such a manner that a relationship between a pitch and a recess depth of a relief pattern satisfies the following expression: $y \leq 0.2x - 20$, where $x$ ($\mu$m) is the pitch and $y$ ($\mu$m) is the recess depth. For instance the pitch ($x$) is herein preferably from 150 $\mu$m to 300 $\mu$m, more preferably from 150 $\mu$m to 250 $\mu$m. For instance the recess depth ($y$) is preferably from 1 $\mu$m to 20 $\mu$m, more preferably from 4 $\mu$m to 15 $\mu$m. Such a configuration allows realizing an electrode production apparatus that affords both releasability and adhesiveness.

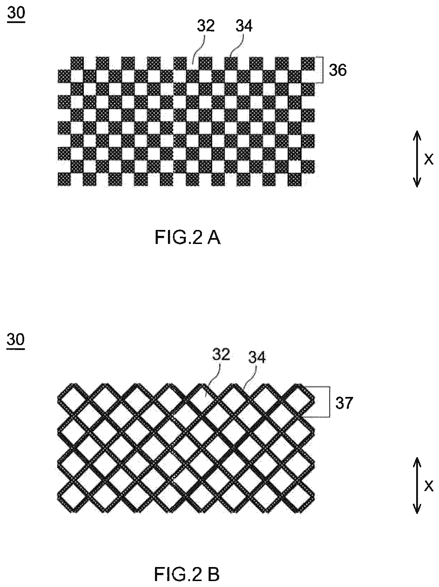

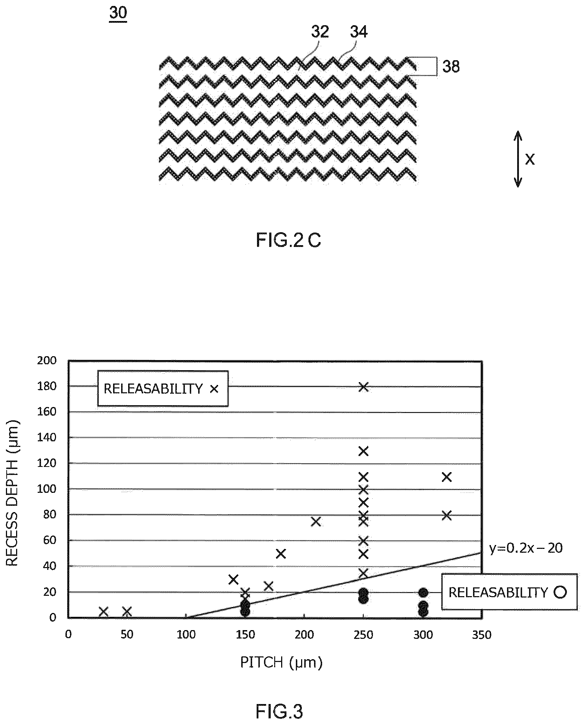

FIG. 2 is a diagram illustrating an example of a predetermined textured shape 30 according to the present embodiment. In the textured shape 30 a predetermined relief pattern is formed at a constant pitch in the X direction (running direction). In the present specification the term "pitch" is the smallest unit over which recesses 32 and protrusions 34 are repeated.

FIG. 2A illustrates an example of a textured shape 30 repeatedly formed as dots. The above "pitch" is denoted herein by the reference numeral 36 in the figure, as the smallest unit over which the recesses 32 and the protrusions 34 are repeated in the running direction. FIG. 2B illustrates an example of a textured shape 30 repeatedly formed as a rhombus shape. The above "pitch" is denoted herein by the reference numeral 37 in the figure. FIG. 2C illustrates an example of a textured shape 30 repeatedly formed as a corrugated shape. The above "pitch" is denoted herein by the reference numeral 38 in the figure. The textured shape 30 is typically a dot-like shape, a rhombus shape or a corrugated shape, such as those illustrated in FIG. 2A to FIG. 2C. However the textured shape 30 is not limited thereto, and may be formed to a shape not depicted in the illustrated examples, so long as the shape obeys the above-described relationship between pitch and recess depth.

Such a repetitive relief pattern is worked by laser engraving. The present inventors actually prepared and studied first rolls 11 and second rolls 12 having various pitches and various recess depths. As a result the present inventors found that if the combination of pitch and recess depth lies within the above ranges, from among numerous combinations of pitch and recess depth, the coating film 22 can then be smoothly transferred, through release and adhesion, from the first roll 11 to the second roll 12 and from the second roll 12 to the electrode collector 24. That is, a coating film (electrode mix layer) 22 of good surface condition can be produced so long as the rolls have formed thereon a textured shape 30 having a pitch and a recess depth lying in the above ranges.

In order to achieve a pitch and recess depth lying in the ranges above it suffices to properly select the conditions of laser engraving for forming the textured shape 30 on the surface of the target first roll 11 and second roll 12.

The material of the circumferential surface on which the textured shape 30 of the first roll 11 and the second roll 12 is formed is preferably a ceramic. Examples of such ceramics include zirconia, alumina, chromium nitride, aluminum nitride, titania, chromium oxide and the like; preferred herein in terms of workability is in particular for instance gray alumina resulting from addition of titanium dioxide to alumina, as well as chromium oxide.

The material of the circumferential surface of the third roll 13 may be the ceramics described above, and may be the same as materials of the surface of rolls of conventionally known electrode production apparatuses. Conventionally known materials include for instance SUS steel, SUJ steel and the like, preferably in particular hardened SUS steel and hardened SUJ steel, given the high hardness that these exhibit.

The rotational speed of the first roll 11 and the second roll 12 may be the same as the rotational speed of rolls in conventionally known electrode production apparatuses. The rotational speed of the second roll 12 is required to be higher than the rotational speed of the first roll 11. Specifically, a relationship between the rotational speed S1 of the first roll 11 and the rotational speed S2 of the second roll 12 satisfies the following expression: $1.5 \times S1 < S2 < 5 \times S1$. With a speed ratio lying in such a range, the coating film 22 can be suitably transferred from the first roll 11 to the second roll 12.

The diameters of the first roll 11, the second roll 12 and the third roll 13 may be the same as the diameters of rolls in conventionally known electrode production apparatuses, and are ordinarily from about several tens of mm (for instance 50 mm) to about several hundreds of mm (for instance 300 mm). The diameters of the first roll 11, the second roll 12 and the third roll 13 may be identical to or different from each other. The widths (lengths in the rotation axis direction) of the first roll 11, the second roll 12 and the third roll 13 may be identical to the widths of rolls in conventionally known electrode production apparatuses, and can be established as appropriate depending on the width of the electrode mix layer 22 to be produced and the width of the electrode collector 24 that is used.

The first roll 11, the second roll 12 and the third roll 13 may be subjected to a known surface treatment (for instance a high water repellency treatment), so long as the effect of the present disclosure is not impaired thereby.

(3) Electrode production method

The electrode production apparatus 10 disclosed herein is configured so that the electrode material 20 supplied between the circumferential surface of the first roll 11 and the circumferential surface of the second roll 12 is caused to adhere to the second roll 12 in the state of a coating film 22 having a thickness defined by the gap between the first roll 11 and the second roll 12, and so that the coating film 22 is further transferred onto the electrode collector 24, to form thus the electrode mix layer (coating film) 22. A method for producing an electrode using the electrode production apparatus 10 having such a configuration will be explained next.

The electrode material 20 is preferably a wet granulated product produced by mixing at least an electrode active material and a solvent as described above. The electrode material 20 is charged between the two partition walls 15 by a feeder or the like, and the electrode material 20 is supplied between the first roll 11 and the second roll 12. The rotational speed of the second roll 12 is set to be higher than the rotational speed of the first roll 11. Further, the first roll 11 and the second roll 12 rotate in opposite directions.

Studies by the present inventors have revealed that the range in which transfer can be suitably performed without the occurrence of adhesion residue is defined by a relationship between releasability and adhesiveness between the electrode material and each roll circumferential surface. Although not particularly limited thereto, transfer can be suitably performed when $F_B < F_A < F_C$ is obeyed by the relationship between a cohesive force ($F_A$) between active material particles within an active material particle group, an adhesive force ($F_B$) between the first roll circumferential surface and one active material particle and an adhesive force ($F_C$) between the second roll circumferential surface and one active material particle. The adhesive force between each roll circumferential surface and one active material particle is defined by the surface area of contact between the one active material particle and the roll circumferential surface. Specifically, when the surface area of contact between the roll circumferential surface and one active material particle is excessive large, adhesiveness between the roll circumferential surface and the one active material particle is too high, and adhesion residue occurs as a result on the roll circumferential surface. In other words, when the pitch is small and the recesses are deep, the surface area of contact between the roll circumferential surface and the one active material particle increases, and as a result adhesion residue occurs on the roll circumferential surface in a case where the above-described range is not satisfied. Transfer of the coating film can therefore be suitably performed, without the occurrence of adhesion residue, by forming a textured shape having a pitch and a recess depth in the ranges described above, on each roll circumferential surface.

The supplied electrode material 20 passes through the clearance between the first roll 11 and the second roll 12. The electrode material 20 becomes thereupon shaped to the coating film 22, of predetermined thickness, adhered to the second roll 12. Although not particularly limited thereto, the first roll 11 and the second roll 12 are caused to rotate, whereupon the wet granulated product supplied as the electrode material 20 is rolled and the granules become thereby integrated with each other, to form a film-like coating film 22. It is considered that in this case a coating film 22 is formed while the above-described cohesive force ($F_A$) between the active material particles is increased. The electrode material 20 constituting thus the film-like coating film 22 becomes sequentially adhered to the circumferential surface of the second roll 12, which has a relatively high rotational speed.

Meanwhile, the electrode collector 24 is transported by the third roll 13, to be supplied to the second roll 12. In a case where the electrode collector 24 is a positive electrode collector, the electrode collector 24 is typically an aluminum foil. In a case where the electrode collector 24 is a negative electrode collector, the electrode collector 24 is typically a copper foil. The third roll 13 and the second roll 12 rotate in opposite directions. The rotational speed of the third roll 13 may be the same as the rotational speed of rolls in conventionally known electrode production apparatuses. The rotational speeds of the second roll 12 and the third roll 13 may be identical or different.

When the coating film 22 adhered to the surface of the second roll 12 comes into contact with the electrode collector 24 transported by the third roll 13, the coating film 22 is transferred from the surface of the second roll 12 onto the electrode collector 24. The electrode mix layer 22 made of the transferred coating film becomes formed as a result on the electrode collector 24.

The pitch and the recess depth of the textured shape 30 of the first roll 11 and the second roll 12 lie within the above ranges, and the rotational speed of the second roll 12 is set to be higher than the rotational speed of the first roll 11, as a result of which the coating film 22 between the first roll 11 and the second roll 12 is released, without leaving an adhesion residue on the circumferential surface of the first roll 11, and becomes held on and adhered to the circumferential surface of the second roll 12. The coating film 22 held on the circumferential surface of the second roll 12 is then released, without leaving an adhesion residue on the circumferential surface of the second roll 12, and adheres to the electrode collector 24. In a case where the circumferential surfaces of the first roll 11 and the second roll 12 are made up of a ceramic, production of a coating film (electrode mix layer) 22 of good surface condition, transferred onto the electrode collector 24, can be achieved, without the occurrence of metallic foreign matter on the surface of the coating film (electrode mix layer) 22.

The electrode collector 24 having the electrode mix layer 22 formed thereon is transported to a drying oven (not shown), and the solvent contained in the electrode mix layer 22 is removed in the drying oven. An electrode is produced in this manner. A drying treatment in a drying oven is not necessary in a case where the electrode material 20 contains no solvent.

The electrode produced by the electrode production apparatus 10 can be suitably used as an electrode of a nonaqueous electrolyte secondary battery such as a lithium ion secondary battery. Therefore, the electrode production apparatus 10 is preferably an electrode production apparatus for nonaqueous electrolyte secondary batteries (in particular lithium ion secondary batteries). The method for producing an electrode using such an electrode production apparatus 10 is preferably a method for producing an electrode for nonaqueous electrolyte secondary batteries (in particular lithium ion secondary batteries).

An electrode produced using the electrode production apparatus disclosed herein can be suitably used as an electrode of a nonaqueous electrolyte secondary battery such as a lithium ion secondary battery. A nonaqueous electrolyte secondary battery, in particular a lithium ion secondary battery, provided with such an electrode can be suitably used for instance as a high-output power source (drive power source) for a motor mounted on a vehicle. The type of vehicle is not particularly limited, and typical examples thereof include automobiles such as plug-in hybrid electric vehicles (PHEV), hybrid electric vehicles (HEV) and battery electric vehicles (BEV).

Test examples relating to the present disclosure will be explained next, but the present disclosure is not meant to be limited to these test examples.

There were prepared a plurality of first rolls and second rolls the circumferential surfaces of which were made up of gray alumina and such that the circumferential surfaces had dissimilar textured shapes (combinations of pitch and recess depth). The textured shape in each example was produced by laser engraving using a laser by Praxair Surface Technologies, K.K. FIG. 3 illustrates the relationship between pitch ($\mu$m) and recess depth ($\mu$m) of the roll circumferential surface of each example.

An electrode mix layer was formed on an electrode collector, using the rolls of each example. Specifically, using the electrode production apparatus of FIG. 1 an electrode material supplied between the first roll and the second roll of each example was caused to adhere, in the form of a coating film, onto the second roll, and the coating film was transferred from the second roll onto an electrode collector separately supplied to the second roll, to thereby from an electrode mix layer made up of the coating film transferred onto the electrode collector. FIG. 3 illustrates the results of an evaluation of adhesion residue of the coating film (electrode material) on the roll circumferential surface of each example. Instances of good releasability are plotted as circles "●" , and instances where adhesion residue occurred on the roll circumferential surface are plotted as crosses "×".

As FIG. 3 reveals, it was found that within ranges where the following expression: $y \leq 0.2x - 20$ was satisfied, the coating film was released and was suitably transferred, with no adhesion residue of the coating film remaining on either the first roll or the second roll. It was further found that the coating film formed on the electrode collector exhibited a good surface condition, with no observable metallic foreign matter.

Concrete examples of the present disclosure have been explained in detail above, but the examples are merely illustrative in nature, and are not meant to limit the scope of the claims in any way. The art set forth in the claims encompasses various alterations and modifications of the concrete examples illustrated above.

## Claims

1. An electrode production apparatus (10), comprising a first roll (11), a second roll (12) disposed opposing the first roll (11) and having a higher rotational speed than that of the first roll (11), and a feeder supplying an electrode material (20) between a circumferential surface of the first roll (11) and a circumferential surface of the second roll (12); **characterized in that**

the circumferential surface of the first roll (11) and the circumferential surface of the second roll (12) each have a predetermined textured shape (30) formed thereon through repetition of a predetermined relief pattern, at a constant pitch, in a running direction; and
the pitch (smallest repeating unit) and a recess depth of the relief pattern are designed so that the following expression holds:

$$y \leq 0.2x - 20,$$

where x ($\mu$m) denotes the pitch and y ($\mu$m) denotes the recess depth, wherein
the electrode material (20) supplied between the circumferential surface of the first roll (11) and the circumferential surface of the second roll (12) is passed through a clearance between the first roll (11) and the second roll (12) to form a coating film (22) and is caused to be adhered, as the coating film (22), on the circumferential surface of the second roll (12), and the coating film (22) is transferred from the circumferential surface of the second roll (12) onto a surface of an electrode collector (24) separately supplied to the second roll (12), to thereby form an electrode mix layer (22) made up of the transferred coating film (22), on the electrode collector (24).

2. The electrode production apparatus (10) according to claim 1, wherein the material of the circumferential surface on which the textured shape (30) is formed, in the first roll (11) and the second roll (12), is a ceramic.

3. The electrode production apparatus (10) according to claim 1 or 2, wherein the pitch of the textured shape (30) lies in a range from 150 $\mu$m to 300 $\mu$m.

4. The electrode production apparatus (10) according to any one of claims 1 to 3,
wherein in the above expression: y $\leq$ 0.2x - 20, x is prescribed so that the recess depth of the relief pattern lies in the range from 4 $\mu$m to 15 $\mu$m.

5. The electrode production apparatus (10) according to any one of claims 1 to 4,
wherein a relationship between a rotational speed S1 of the first roll (11) and a rotational speed S2 of the second roll (12) satisfies the following expression:

$$1.5 \times S1 < S2 < 5 \times S1.$$

6. An electrode production method, comprising:

providing the electrode production apparatus (10) according to any one of claims 1 to 5;
supplying an electrode collector (24) to the electrode production apparatus (10); and
supplying an electrode material (20) between a first roll (11) and a second roll (12) of said electrode production apparatus (10) disposed opposing the first roll (11) and having a higher rotational speed than that of the first roll (11); **characterized in that**
a circumferential surface of the first roll (11) and a circumferential surface of the second roll (12) each have a predetermined textured shape (30) formed thereon through repetition of a predetermined relief pattern, at a constant pitch, in a running direction, the method further comprising:

passing the electrode material (20) through a clearance between the first roll (11) and the second roll (12) to form a coating film (22),
the electrode material (20) supplied between a circumferential surface of the first roll (11) and a circumferential surface of the second roll (12) is caused to be adhered, as the coating film (22), on the circumferential surface of the second roll (12), and the coating film (22) is transferred from the second roll (12) onto a surface of an electrode collector (24) separately supplied to the second roll (12), to thereby form an electrode mix layer made up of the transferred coating film (22), on the electrode collector (24).

7. The electrode production method according to claim 6, wherein when a total weight of the electrode material (20) is defined as 100% by weight, the weight% of solids is 55 wt% to 90 wt%.

**Patentansprüche**

1. Elektrodenherstellungsvorrichtung (10), aufweisend eine erste Rolle (11), eine zweite Rolle (12), die der ersten Rolle (11) gegenüberliegend angeordnet ist und eine höhere Drehgeschwindigkeit als die erste Rolle (11) aufweist, und eine Zuführeinrichtung, die ein Elektrodenmaterial (20) zwischen einer Umfangsoberfläche der ersten Rolle (11) und einer Umfangsoberfläche der zweiten Rolle (12) zuführt; **dadurch gekennzeichnet, dass**

die Umfangsoberfläche der ersten Rolle (11) und die Umfangsoberfläche der zweiten Rolle (12) jeweils eine vorbestimmte strukturierte Form (30) aufweisen, die durch Wiederholung eines vorbestimmten Reliefmusters bei einem konstanten Abstand in einer Laufrichtung darauf ausgebildet wird; und

der Abstand (kleinste Wiederholungseinheit) und eine Vertiefungstiefe des Reliefmusters so konzipiert sind, dass die folgende Gleichung gilt:

$$y \leq 0{,}2x - 20,$$

wobei x ($\mu$m) den Abstand und y ($\mu$m) die Vertiefungstiefe bezeichnet, wobei das zwischen der Umfangsoberfläche der ersten Rolle (11) und der Umfangsoberfläche der zweiten Rolle (12) zugeführte Elektrodenmaterial (20) durch einen Zwischenraum zwischen der ersten Rolle (11) und der zweiten Rolle (12) bewegt wird, um einen Beschichtungsfilm (22) zu bilden, und, als der Beschichtungsfilm (22), auf der Umfangsoberfläche der zweiten Rolle (12) haften bleibt, und der Beschichtungsfilm (22) von der Umfangsoberfläche der zweiten Rolle (12) auf eine Oberfläche eines Elektrodenkollektors (24) übertragen wird, der der zweiten Rolle (12) separat zugeführt wird, um dadurch eine Elektrodenmischschicht (22), die aus dem übertragenen Beschichtungsfilm (22) besteht, auf dem Elektrodenkollektor (24) zu bilden.

2. Elektrodenherstellungsvorrichtung (10) nach Anspruch 1, wobei das Material der Umfangsoberfläche, auf der die strukturierte Form (30) ausgebildet ist, in der ersten Rolle (11) und der zweiten Rolle (12) eine Keramik ist.

3. Elektrodenherstellungsvorrichtung (10) nach Anspruch 1 oder 2, wobei der Abstand der strukturierten Form (30) in einem Bereich von 150 $\mu$m bis 300 $\mu$m liegt.

4. Elektrodenherstellungsvorrichtung (10) nach einem der Ansprüche 1 bis 3, wobei in der vorstehenden Gleichung: y $\leq$ 0,2x - 20, x so vorgegeben ist, dass die Vertiefungstiefe des Reliefmusters im Bereich von 4 $\mu$m bis 15 $\mu$m liegt.

5. Elektrodenherstellungsvorrichtung (10) nach einem der Ansprüche 1 bis 4, wobei eine Beziehung zwischen einer Drehgeschwindigkeit S1 der ersten Rolle (11) und einer Drehgeschwindigkeit S2 der zweiten Rolle (12) den folgenden Ausdruck erfüllt:

$$1{,}5 \times S1 < S2 < 5 \times S1.$$

6. Elektrodenherstellungsverfahren, umfassend:

Bereitstellen der Elektrodenherstellungsvorrichtung (10) nach einem der Ansprüche 1 bis 5; Zuführen eines Elektrodenkollektors (24) zu der Elektrodenherstellungsvorrichtung (10); und Zuführen eines Elektrodenmaterials (20) zwischen einer ersten Rolle (11) und einer zweiten Rolle (12) der Elektrodenherstellungsvorrichtung (10), die der ersten Rolle (11) gegenüberliegend angeordnet ist und eine höhere Drehgeschwindigkeit als die erste Rolle (11) aufweist;

**dadurch gekennzeichnet, dass**

eine Umfangsoberfläche der ersten Rolle (11) und eine Umfangsoberfläche der zweiten Rolle (12) jeweils eine vorbestimmte strukturierte Form (30) aufweisen, die durch Wiederholung eines vorbestimmten Reliefmusters bei einem konstanten Abstand in einer Laufrichtung darauf ausgebildet wird, wobei das Verfahren ferner umfasst:

Bewegen des Elektrodenmaterials (20) durch einen Zwischenraum zwischen der ersten Rolle (11) und der zweiten Rolle (12), um einen Beschichtungsfilm (22) zu bilden,

Bewirken, dass das zwischen einer Umfangsoberfläche der ersten Rolle (11) und einer Umfangsoberfläche der zweiten Rolle (12) zugeführte Elektrodenmaterial (20) als der Beschichtungsfilm (22) auf der Umfangsoberfläche der zweiten Rolle (12) haftet, und der Beschichtungsfilm (22) von der zweiten Rolle (12) auf eine Oberfläche eines Elektrodenkollektors (24) übertragen wird, der der zweiten Rolle (12) separat zugeführt wird, um dadurch eine Elektrodenmischschicht, die aus dem übertragenen Beschichtungsfilm (22) besteht, auf dem Elektrodenkollektor (24) zu bilden.

7. Elektrodenherstellungsverfahren nach Anspruch 6, wobei, wenn ein Gesamtgewicht des Elektrodenmaterials (20) als 100 Gewichtsprozent definiert ist, der in Gewichtsprozent angegebene Anteil von Feststoffen 55 Gewichtsprozent bis 90 Gewichtsprozent beträgt.

## Revendications

1. Appareil de production d'électrodes (10), comprenant un premier rouleau (11), un deuxième rouleau (12) disposé en regard du premier rouleau (11) et ayant une vitesse de rotation plus élevée que celle du premier rouleau (11), et un dispositif d'alimentation alimentant un matériau d'électrode (20) entre une surface périphérique du premier rouleau (11) et une surface périphérique du deuxième rouleau (12) ; **caractérisé en ce que**

la surface périphérique du premier rouleau (11) et la surface périphérique du deuxième rouleau (12) portent chacune une forme texturée prédéterminée (30) formée par répétition d'un motif en relief prédéterminé, à un pas constant, dans une direction de défilement ; et

le pas (plus petite unité de répétition) et une profondeur d'évidement du motif en relief sont conçus de sorte que l'expression suivante soit vérifiée :

$$y \leq 0{,}2x - 20,$$

où x ($\mu$m) désigne le pas et y ($\mu$m) désigne la profondeur d'évidement, dans lequel

le matériau d'électrode (20) alimenté entre la surface périphérique du premier rouleau (11) et la surface périphérique du deuxième rouleau (12) passe à travers un jeu entre le premier rouleau (11) et le deuxième rouleau (12) pour former un film de revêtement (22) et est amené à adhérer, en tant que film de revêtement (22), sur la surface périphérique du deuxième rouleau (12), et le film de revêtement (22) est transféré depuis la surface périphérique du deuxième rouleau (12) sur une surface d'un collecteur d'électrode (24) alimenté séparément au deuxième rouleau (12), afin de former une couche de mélange d'électrode (22) constituée du film de revêtement transféré (22), sur le collecteur d'électrode (24).

2. Appareil de production d'électrodes (10) selon la revendication 1, dans lequel le matériau de la surface périphérique sur laquelle la forme texturée (30) est formée, dans le premier rouleau (11) et le deuxième rouleau (12), est une céramique.

3. Appareil de production d'électrodes (10) selon la revendication 1 ou 2, dans lequel le pas de la forme texturée (30) se situe dans une plage allant de 150 $\mu$m à 300 $\mu$m.

4. Appareil de production d'électrodes (10) selon l'une quelconque des revendications 1 à 3, dans lequel, dans l'expression ci-dessus : y $\leq$ 0,2x - 20, x est prescrit de sorte que la profondeur d'évidement du motif en relief se situe dans la plage allant de 4 $\mu$m à 15 $\mu$m.

5. Appareil de production d'électrodes (10) selon l'une quelconque des revendications 1 à 4, dans lequel une relation entre une vitesse de rotation S1 du premier rouleau (11) et une vitesse de rotation S2 du deuxième rouleau (12) satisfait l'expression suivante :

$$1{,}5 \times S1 < S2 < 5 \times S1.$$

6. Procédé de production d'électrodes, comprenant :

fournir l'appareil de production d'électrodes (10) selon l'une quelconque des revendications 1 à 5 ;
fournir un collecteur d'électrode (24) à l'appareil de production d'électrodes (10) ; et
alimenter un matériau d'électrode (20) entre un premier rouleau (11) et un deuxième rouleau (12) dudit appareil de production d'électrodes (10) disposé en regard du premier rouleau (11) et ayant une vitesse de rotation plus élevée que celle du premier rouleau (11) ;
**caractérisé en ce que**
une surface périphérique du premier rouleau (11) et une surface périphérique du deuxième rouleau (12) portent chacune une forme texturée prédéterminée (30) formée par répétition d'un motif en relief prédéterminé, à un pas constant, dans une direction de défilement, le procédé comprenant en outre :

faire passer le matériau d'électrode (20) à travers un jeu entre le premier rouleau (11) et le deuxième rouleau (12) pour former un film de revêtement (22),
le matériau d'électrode (20) alimenté entre une surface périphérique du premier rouleau (11) et une surface périphérique du deuxième rouleau (12) est amené à adhérer, en tant que film de revêtement (22), sur la surface périphérique du deuxième rouleau (12), et le film de revêtement (22) est transféré depuis le deuxième rouleau (12) sur une surface d'un collecteur d'électrode (24) alimenté séparément au deuxième rouleau (12), afin de former une couche de mélange d'électrode constituée du film de revêtement transféré (22), sur le collecteur d'électrode (24).

7. Procédé de production d'électrodes selon la revendication 6, dans lequel, lorsqu'un poids total du matériau d'électrode (20) est défini comme étant 100 % en poids, le pourcentage en poids de solides est de 55 % en poids à 90 % en poids.

FIG.1

30

32    34

36

FIG.2 A

X

30

32    34

37

FIG.2 B

X

30

32  34

38

X

FIG.2 C

$y=0.2x-20$

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018063776 A
- JP 2016207340 A

- US 20150224529 A1